# EUROPEAN PATENT APPLICATION

(11) **EP 4 502 672 A1**
(43) Date of publication of application: **05.02.2025**
(21) Application number: 23780912.4
(22) Date of filing: 30.03.2023
(51) Int. Cl.: G02B 5/23, C08F 220/28, C08F 290/06, G02C 7/00, G02C 7/10

(54) **POLYMERIZABLE COMPOSITION FOR OPTICAL ARTICLE AND OPTICAL ARTICLE**

(30) Priority: 31.03.2022 JP 2022058878
(71) Applicant: Hoya Lens Thailand Ltd., Pathumthani 12130 (TH)
(72) Inventor: KOBAYASHI Kei, Tokyo 160-8347 (JP)
(74) Representative: Hoffmann Eitle
(86) International application number: PCT/JP2023/013258
(87) International publication number: WO 2023/190904

(57) **Abstract**

There is provided a polymerizable composition for an optical article, including the following component A, component B and component C: component A: multifunctional (meth)acrylate containing a polyalkylene glycol moiety and having a molecular weight of 500 or more, component B: monofunctional (meth)acrylate represented by the following Formula 1, and component C: photochromic compound 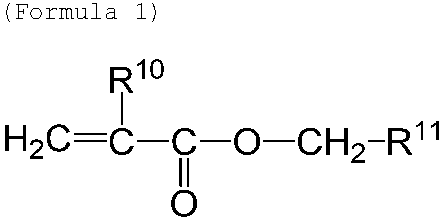 (in Formula 1, R¹⁰ represents a hydrogen atom or a methyl group, and R¹¹ represents a linear alkyl group having 3 or more carbon atoms or a branched alkyl group having 3 or more carbon atoms).

## Description

### [Technical Field]

The present invention relates to a polymerizable composition for an optical article and an optical article.

### [Background Art]

A photochromic compound is a compound having a property of developing a color under emission of light in a wavelength range having photoresponsivity and fading without light emission (photochromic properties). As a method of imparting photochromic properties to an optical article such as a spectacle lens, a method in which a coating containing a photochromic compound and a polymerizable compound is provided on a substrate, and the coating is cured to form a cured layer having photochromic properties (photochromic layer) may be exemplified (for example, refer to PTL 1).

### [Citation List]

### [Patent Literature]

[PTL 1] WO 2003/011967

### [Summary of Invention]

### [Technical Problem]

It is desirable for the optical article having the above photochromic properties to exhibit a high coloring density when colored upon exposure to light outdoors and the like. In addition, examples of performance desired for the optical article include exhibiting a fast fading rate after color development by light emission. However, according to the studies performed by the inventors, there is a trade-off relationship between a coloring density and a fading rate, and it is difficult to achieve both a high coloring density and a fast fading rate in the related art.

An object of one aspect of the present invention is to provide a polymerizable composition for an optical article, which can form a photochromic layer that exhibits a high coloring density and a fast fading rate when colored upon exposure to light.

### [Solution to Problem]

One aspect of the present invention relates to a polymerizable composition for an optical article, including the following component A, component B and component C (hereinafter simply referred to as a "composition"). Component A: multifunctional (meth)acrylate containing a polyalkylene glycol moiety and having a molecular weight of 500 or more Component B: monofunctional (meth)acrylate represented by the following Formula 1 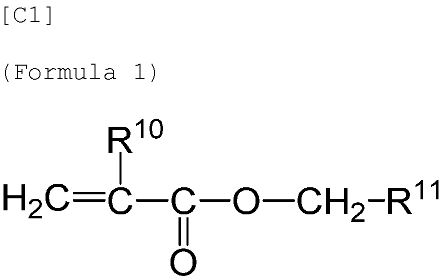 (in Formula 1, R¹⁰ represents a hydrogen atom or a methyl group, and R¹¹ represents a linear alkyl group having 3 or more carbon atoms or a branched alkyl group having 3 or more carbon atoms) Component C: photochromic compound.

As an example, a photochromic compound undergoes structural change through an excited state when it receives light such as sunlight. The structure after structural change due to light emission may be called a "colored component." On the other hand, the structure before light emission may be called a "colorless component." Here, regarding the colorless component, "colorless" is not limited to being completely colorless, and includes a case in which the color is lighter than that of the colored component. After the colored component undergoes structural change due to light emission and a color is developed, when the rate of structural change from the colored component to the colorless component is faster, the fading rate is faster. It is thought that, in the photochromic layer, when molecular motion of the photochromic compound is easier in the matrix formed by the polymerization reaction of the polymerizable compound, the rate of structural change is faster. In order to increase such a rate, a flexible matrix is considered desirable.

On the other hand, regarding the coloring density, it is speculated that, in order to increase the coloring density, a strong intermolecular interaction between the photochromic compound that has undergone structural change to a colored component and the matrix is desirable.

In relation to the above point, the inventors speculate that the component A can contribute to making the matrix flexible. Specifically, it is thought that the reason why a flexible matrix can be formed by the component A is that the molecular weight of the component A is 500 or more and the component A has a polyalkylene glycol moiety. In addition, the inventors think that the "-CH₂-R¹¹" moiety of the component B exhibits a strong intermolecular interaction with the photochromic compound that has undergone structural change to a colored component. On the other hand, the "-CH₂-R¹¹" moiety is a relatively rigid functional group. However, since the component B is a monofunctional (meth)acrylate having such a rigid functional group, it is thought that the "-CH₂-R¹¹" moiety is easily movable in the matrix formed using the component B. Therefore, it is speculated that the flexibility of the matrix can be secured when the component B is used. Thus, the inventors think that, using the composition containing the component A and the component B together with a photochromic compound (component C), it is possible to form a photochromic layer that exhibits a high coloring density and a fast fading rate when colored upon exposure to light. However, the present invention is not limited to the speculations described in this specification.

### [Advantageous Effects of Invention]

According to one aspect of the present invention, it is possible to provide a polymerizable composition for an optical article, which can form a photochromic layer that exhibits a high coloring density and a fast fading rate when colored upon exposure to light. In addition, according to one aspect of the present invention, it is possible to provide an optical article having a photochromic layer that exhibits a high coloring density and a fast fading rate when colored upon exposure to light.

### [Description of Embodiments]

### [Polymerizable composition for optical article]

Hereinafter, a polymerizable composition for an optical article according to one aspect of the present invention will be described in more detail.

In the present invention and this specification, the polymerizable composition is a composition containing a polymerizable compound. The polymerizable compound is a compound having a polymerizable group. The polymerizable composition for an optical article according to one aspect of the present invention is a polymerizable composition used for producing an optical article, and may be a coating composition for an optical article, and more specifically, a coating composition for forming a photochromic layer of an optical article. The coating composition for an optical article is a composition applied to a substrate for producing an optical article. Examples of optical articles include various lenses such as a spectacle lens and a goggles lens, a visor (cap) part of a sun visor, and a shield member of a helmet. For example, a spectacle lens produced by applying the composition to a lens substrate becomes a spectacle lens having a photochromic layer and can exhibit photochromic properties.

In the present invention and this specification, "(meth)acrylate" refers to both an acrylate and a methacrylate. An "acrylate" is a compound having one or more acryloyl groups in one molecule. A "methacrylate" is a compound having one or more methacryloyl groups in one molecule. The number of functional groups of the (meth)acrylate is the number of groups selected from the group consisting of acryloyl groups and methacryloyl groups contained in one molecule. In the present invention and this specification, a "methacrylate" contains only a methacryloyl group as a (meth)acryloyl group, and something that contains an acryloyl group and a methacryloyl group as (meth)acryloyl groups is an acrylate. The acryloyl group may be contained in the form of an acryloyloxy group, and the methacryloyl group may be contained in the form of a methacryloyloxy group. The "(meth)acryloyl group" described below refers to both an acryloyl group and a methacryloyl group, and "(meth)acryloyloxy group" refers to both an acryloyloxy group and a methacryloyloxy group. In addition, unless otherwise specified, the groups described may have substituents or may be unsubstituted. When a group has a substituent, examples of substituents include an alkyl group (for example, a linear alkyl group having 1 to 6 carbon atoms or a branched alkyl group having 1 to 6 carbon atoms), a hydroxyl group, an alkoxy group (for example, an alkoxy group having 1 to 6 carbon atoms), a halogen atom (for example, a fluorine atom, a chlorine atom, and a bromine atom), a cyano group, an amino group, a nitro group, an acyl group, a carboxy group, an aryl group, and a polyether group. In addition, for a group having a substituent, "the number of carbon atoms" is the number of carbon atoms of a part containing no substituents. In addition, in the present invention and this specification, "linear alkyl group or branched alkyl group" does not include a cycloalkyl group. The linear alkyl group or branched alkyl group may be unsubstituted or may have a substituent. It is allowable for the linear alkyl group or branched alkyl group to have a cycloalkyl group (for example, a cyclohexyl group) as a substituent. In one aspect, it is preferable that the linear alkyl group or branched alkyl group not include a cycloalkyl group as a substituent.

### <Polymerizable compound>

The composition contains at least a component A and a component B as polymerizable compounds. Hereinafter, the component A and the component B will be described.

### (Component A)

The component A is a multifunctional (meth)acrylate containing a polyalkylene glycol moiety and having a molecular weight of 500 or more. In the present invention and this specification, the "polyalkylene glycol moiety" refers to a substructure represented by the following Formula 2:

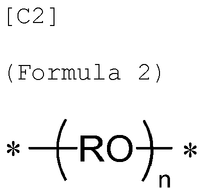

In Formula 2, R represents an alkylene group, n represents the number of repetitions of alkoxy groups represented by RO and is 2 or more. * indicates a bonding position at which the substructure represented by Formula 2 is bonded to an adjacent atom. The number of carbon atoms of the alkylene group represented by R may be 1 or more or 2 or more, and may be, for example, 5 or less or 4 or less. Specific examples of alkylene groups represented by R include an ethylene group, a propylene group, and a tetramethylene group. n is 2 or more, and may be, for example, 30 or less, 25 or less or 20 or less. In one aspect, the component A may have the above substructure in which R represents an ethylene group, that is, have a polyethylene glycol moiety.

The molecular weight of the component A is 500 or more. In the present invention and this specification, for the molecular weight of the polymer, a theoretical molecular weight calculated from the structural formula determined by structural analysis of the compound or the material preparation ratio during production is used. The molecular weight of the component A is 500 or more, preferably 510 or more, more preferably 520 or more, preferably 550 or more, more preferably 570 or more, still more preferably 600 or more, still more preferably 630 or more, and yet more preferably 650 or more. The molecular weight of the component A is preferably, for example, 2000 or less, 1500 or less, 1200 or less, 1000 or less, or 800 or less, in order to increase the hardness of the photochromic layer.

The component A is a multifunctional (meth)acrylate, and may be, for example, a difunctional, trifunctional, tetrafunctional or pentafunctional (meth)acrylate, and is preferably a bifunctional or trifunctional (meth)acrylate. The component A may contain, as a (meth)acryloyl group, only an acryloyl group, only a methacryloyl group, or an acryloyl group and a methacryloyl group. That is, the component A may be an acrylate or a methacrylate.

In one aspect, the component A may be an acyclic multifunctional (meth)acrylate. In the present invention and this specification, "acyclic" means that a component does not include a cyclic structure. On the other hand, "cyclic" means that a component includes a cyclic structure. The acyclic multifunctional (meth)acrylate is a di- or higher functional (meth)acrylate including no cyclic structure. Specific examples of such components A include polyalkylene glycol di(meth)acrylate represented by the following Formula 3.

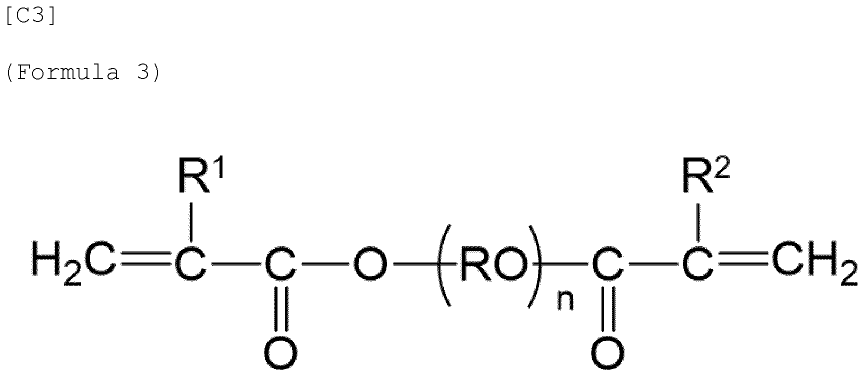

In Formula 3, R¹ and R² each independently represent a hydrogen atom or a methyl group, R represents an alkylene group, and n represents the number of repetitions of alkoxy groups represented by RO and is 2 or more. R and n are described above for the substructure represented by Formula 2. The polyalkylene glycol di(meth)acrylate represented by Formula 3 may contain, as a (meth)acryloyl group, only an acryloyl group, only a methacryloyl group, or an acryloyl group and a methacryloyl group. Specific examples of polyalkylene glycol di(meth)acrylates represented by Formula 3 include polyethylene glycol di(meth)acrylate, polypropylene glycol di(meth)acrylate, and polytetramethylene glycol di(meth)acrylate.

In addition, specific examples of components A include tri(meth)acrylate represented by the following Formula 4. The tri(meth)acrylate represented by Formula 4 may contain, as a (meth)acryloyl group, only an acryloyl group, only a methacryloyl group, or an acryloyl group and a methacryloyl group.

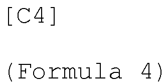

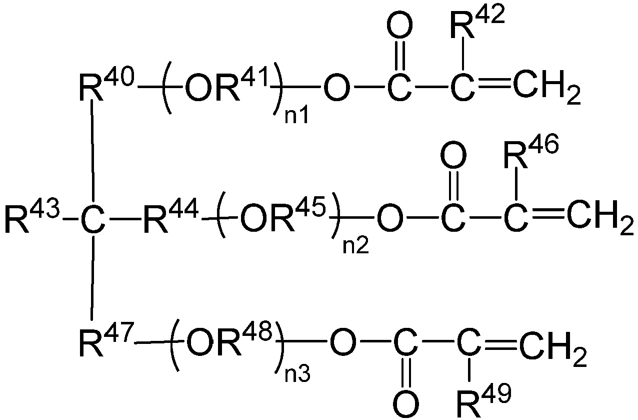

In Formula 4, R⁴⁰, R⁴¹, R⁴⁴, R⁴⁵, R⁴⁷ and R⁴⁸ each independently represent an alkylene group, R⁴³ represents an alkyl group, R⁴², R⁴⁶ and R⁴⁹ each independently represent a hydrogen atom or a methyl group. n1 represents the number of repetitions of alkoxy groups represented by OR⁴¹ and is 2 or more. n2 represents the number of repetitions of alkoxy groups represented by OR⁴⁵, and is 2 or more. n3 represents the number of repetitions of alkoxy groups represented by OR⁴⁸ and is 2 or more.

Hereinafter, Formula 4 will be described in more detail.

R⁴¹, R⁴⁵ and R⁴⁸ in Formula 4 are as described above for R in Formula 2. n1, n2 and n3 in Formula 4 are as described above for n in Formula 2. In Formula 4, R⁴¹, R⁴⁵ and R⁴⁸ may be the same, or two or three thereof may be different from each other. The same applies to n1, n2 and n3.

R⁴², R⁴⁶ and R⁴⁹ each independently represent a hydrogen atom or a methyl group. The tri(meth)acrylate represented by Formula 4 may contain, as a (meth)acryloyl group, only an acryloyl group, only a methacryloyl group, or an acryloyl group and a methacryloyl group.

The number of carbon atoms of the alkyl group represented by R⁴³ may be 1 or more or 2 or more, and may be, for example, 5 or less or 4 or less. The alkyl group represented by R⁴³ may be a linear alkyl group or a branched alkyl group. Specific examples of alkyl groups represented by R⁴³ include a methyl group and an ethyl group.

R⁴⁰, R⁴⁴ and R⁴⁷ each independently represent an alkylene group. The number of carbon atoms of such an alkylene group may be 1 or more or 2 or more, and may be, for example, 5 or less or 4 or less. Specific examples thereof include an ethylene group, a propylene group, and a tetramethylene group.

Specific examples of tri(meth)acrylates represented by Formula 4 include trimethylolpropane polyoxyethylene ether tri(meth)acrylate.

### (Component B)

The component B is a monofunctional (meth)acrylate represented by the following Formula 1.

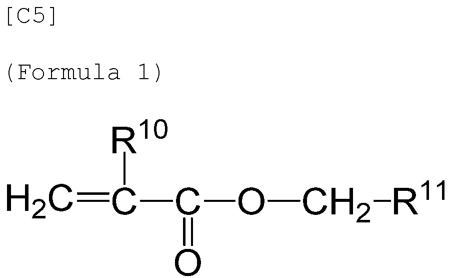

Hereinafter, Formula 1 will be described in more detail.

In Formula 1, R¹⁰ represents a hydrogen atom or a methyl group. The monofunctional (meth)acrylate represented by Formula 1 may be an acrylate or a methacrylate.

R¹¹ represents a linear alkyl group having 3 or more carbon atoms or a branched alkyl group having 3 or more carbon atoms. These alkyl groups may be unsubstituted or may have a substituent. The substituent is not particularly limited, and for example, the various substituents described above may be exemplified. The number of carbon atoms of the linear or branched alkyl group represented by R¹¹ is 3 or more, and in order to further increase the fading rate, the number is preferably 4 or more, more preferably 5 or more, and still more preferably 6 or more, 7 or more, 8 or more, 9 or more, 10 or more, and 11 or more in that order. On the other hand, in consideration of the solubility of the photochromic compound (component C) in the composition, the number of carbon atoms is preferably 15 or less, more preferably 14 or less, and still more preferably 13 or less and 12 or less in that order.

The molecular weight of the monofunctional (meth)acrylate represented by Formula 1 may be, for example, in a range of 100 to 300, but the molecular weight is not limited to this range. Specific examples of monofunctional (meth)acrylates represented by Formula 1 include n-butyl(meth)acrylate, 2-ethylhexyl(meth)acrylate, isodecyl(meth)acrylate, and n-lauryl(meth)acrylate.

In the composition, the content of the component A is preferably 50 mass% or more, more preferably 55 mass% or more, and still more preferably 60 mass% or more based on a total amount of 100 mass% of the polymerizable compounds contained in the composition. In one aspect, the component A may be a component whose proportion is the largest among the plurality of polymerizable compounds contained in the composition. In addition, the content of the component A may be 90 mass% or less, 85 mass% or less or 80 mass% or less based on a total amount of 100 mass% of the polymerizable compounds contained in the composition. The composition may contain only one type of component A in one aspect, and may contain two or more types thereof in another aspect. When the composition contains two or more types of components A, the content of the component A is a total content of two or more types thereof. This similarly applies to the contents of other components.

The content of the component B is preferably 5 mass% or more, more preferably 10 mass% or more, and still more preferably 15 mass% or more based on a total amount of 100 mass% of the polymerizable compounds contained in the composition. In addition, the content of the component B is preferably 30 mass% or less and more preferably 25 mass% or less based on a total amount of 100 mass% of the polymerizable compounds contained in the composition.

The composition may contain, as a polymerizable compound, only the component A and the component B in one aspect, or may contain one or more types of other polymerizable compounds in addition to the component A and the component B in another aspect. The content of the polymerizable compound in the composition (that is, a total content of a plurality of polymerizable compounds) may be, for example, 80 mass% or more, 85 mass% or more or 90 mass% or more based on a total amount of 100 mass% of the composition. In addition, the content of the polymerizable compound in the composition may be, for example, 99 mass% or less, 95 mass% or less, 90 mass% or less or 85 mass% or less based on a total amount of 100 mass% of the composition. In the present invention and this specification, regarding the content, the "total amount of the composition" is a total amount of all components excluding a solvent in the composition containing the solvent. The composition may or may not contain a solvent. When the composition contains a solvent, any solvent in an arbitrary amount can be used as a usable solvent as long as it does not inhibit progress of the polymerization reaction of the polymerizable composition.

### <Photochromic compound (component C)>

The composition contains a photochromic compound (component C) together with the polymerizable compound. As the photochromic compound contained in the composition, known compounds exhibiting photochromic properties can be used. The photochromic compound can exhibit photochromic properties with respect to, for example, ultraviolet rays. Examples of photochromic compounds include compounds having a known framework that exhibits photochromic properties, such as azobenzenes, spiropyrans, spirooxazines, naphthopyrans, indenonaphthopyrans, phenanthropyrans, hexaallylbisimidazoles, donor-acceptor Stenhouse adducts (DASA), salicylidene anilines, dihydropyrenes, anthracene dimers, fulgides, diarylethenes, phenoxynaphthacenequinones, and stilbenes. Preferable examples of photochromic compounds include fulgimide compounds, spirooxazine compounds, chromene compounds, and indeno-fused naphthopyran compounds. In addition, examples of photochromic compounds include one or more selected from the group consisting of photochromic compounds represented by General Formula A, photochromic compounds represented by General Formula B and photochromic compounds represented by General Formula C described in WO 2022/138966. The photochromic compounds may be used alone or two or more thereof may be used in combination. The content of the photochromic compounds of the composition may be, for example, about 0.1 to 15 mass%, based on a total amount of 100 mass% of the composition, but the content is not limited to this range.

### <Other components>

The composition may contain one or more types of various additives that can be generally added to the polymerizable composition in an arbitrary content in addition to the polymerizable compound and the photochromic compound. Examples of additives that can be added to the composition may include a polymerization initiator that allows a polymerization reaction to progress.

For example, regarding the polymerization initiator, a known polymerization initiator can be used, and a radical polymerization initiator is preferable, and it is more preferable that only a radical polymerization initiator be contained as a polymerization initiator. In addition, regarding the polymerization initiator, a photopolymerization initiator or a thermal polymerization initiator can be used, and in order for a polymerization reaction to progress in a short time, a photopolymerization initiator is preferable. Examples of photoradical polymerization initiators include benzoin ketals such as 2,2-dimethoxy-1,2-diphenylethane-1-one; α-hydroxyketones such as 1-hydroxycyclohexylphenyl ketone, 2-hydroxy-2-methyl-1-phenylpropan-1-one, and 1-[4-(2-hydroxyethoxy)phenyl]-2-hydroxy-2-methyl-1-propane-1-one; α-aminoketones such as 2-benzyl-2-dimethylamino-1-(4-morpholinophenyl)-butane-1-one, and 1,2-methyl-1-[4-(methylthio)phenyl]-2-morpholinopropan-1-one; oxime esters such as 1-[(4-phenylthio)phenyl]-1,2-octadione-2-(benzoyl)oxime; phosphine oxides such as bis(2,4,6-trimethylbenzoyl)phenylphosphine oxide, bis(2,6-dimethoxybenzoyl)-2,4,4-trimethylpentyl phosphine oxide, and 2,4,6-trimethylbenzoyldiphenylphosphine oxide; 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, and 2-(p-methoxyphenyl)-4,5-diphenylimidazole dimer; benzophenone compounds such as benzophenone, N,N'-tetramethyl-4,4'-diaminobenzophenone, N,N'-tetraethyl-4,4'-diaminobenzophenone, and 4-methoxy-4'-dimethylaminobenzophenone; quinone compounds such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, and 2,3-dimethylanthraquinone; benzoin ethers such as benzoin methyl ether, benzoin ethyl ether, and benzoin phenyl ether; benzoin compounds such as benzoin, methyl benzoin, and ethyl benzoin; benzyl compounds such as benzyl dimethyl ketal; acridine compounds such as 9-phenylacridine, 1,7-bis(9,9'-acridinyl heptane); and N-phenylglycine, and coumarin. In addition, in the 2,4,5-triarylimidazole dimer, substituents on the aryl groups of two triarylimidazole moieties may provide the same symmetric compound, or may provide different asymmetric compounds. In addition, a thioxanthone compound and a tertiary amine may be combined such as a combination of diethylthioxanthone and dimethylaminobenzoic acid. Among these, in consideration of curability, transparency and heat resistance, α-hydroxyketone and phosphine oxide are preferable. The content of the polymerization initiator may be, for example, in a range of 0.1 to 5 mass% based on a total amount of 100 mass% of the composition.

Known additives that can be generally added to the composition containing a photochromic compound, for example, additives such as a surfactant, an antioxidant, a radical scavenger, a light stabilizer, a UV absorbing agent, an anti-coloring agent, an antistatic agent, a fluorescent dye, a dye, a pigment, a fragrance, a plasticizer, and a silane coupling agent in an arbitrary amount can be additionally added to the composition. Known compounds can be used as these additives.

The composition can be prepared by simultaneously or sequentially mixing the various components described above in any order.

### [Optical article]

One aspect of the present invention relates to an optical article including a substrate and a photochromic layer obtained by curing the composition.

Hereinafter, the optical article will be described in more detail.

### <Substrate>

The optical article can have a photochromic layer on a substrate selected according to the type of the optical article. As an example of the substrate, a spectacle lens substrate may be a plastic lens substrate or a glass lens substrate. The glass lens substrate may be, for example, a lens substrate made of inorganic glass. The lens substrate is preferably a plastic lens substrate because it is light-weight, hard to break, and easy to handle. Examples of plastic lens substrates include (meth)acrylic resins, styrene resins, polycarbonate resins, allyl resins, allyl carbonate resins such as diethylene glycol bis(allyl carbonate) resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and a cured product (generally referred to as a transparent resin) obtained by curing a curable composition containing a (thio)epoxy compound having one or more disulfide bonds in the molecule. As the lens substrate, an undyed substrate (colorless lens) may be used or a dyed substrate (dyed lens) may be used. The refractive index of the lens substrate may be, for example, about 1.50 to 1.75. However, the refractive index of the lens substrate is not limited to the above range, and may be within the above range, or may be above or below outside the above range. In the present invention and this specification, the refractive index is a refractive index for light having a wavelength of 500 nm. In addition, the lens substrate may be a lens having refractive power (so-called prescription lens) or a lens having no refractive power (so-called no-prescription lens).

The spectacle lens may include various lenses such as a single focus lens, a multifocal lens, and a progressive power lens. The type of the lens is determined by the surface shape of both sides of the lens substrate. In addition, the surface of the lens substrate may be a convex surface, a concave surface, or a flat surface. In a general lens substrate and spectacle lens, the object-side surface is a convex surface and the eyeball-side surface is a concave surface. However, the present invention is not limited thereto. The photochromic layer may be generally provided on the object-side surface of the lens substrate, or may be provided on the eyeball-side surface.

### <Photochromic layer>

The photochromic layer of the optical article can be formed by directly applying the composition onto the surface of the substrate or indirectly applying the composition onto the surface of the substrate with one or more other layers, and performing a curing treatment on the applied composition. Examples of other layers include a primer layer for improving the adhesion between the photochromic layer and the substrate. Such a primer layer is known. As the coating method, known coating methods such as a spin coating method and a dip coating method can be used, and a spin coating method is preferable in consideration of coating uniformity. The curing treatment may be light emission and/or heat treatment, and light emission is preferable in order for the curing reaction to progress in a short time. Curing treatment conditions may be determined according to the types of various components (polymerizable compounds, polymerization initiators and the like described above) contained in the composition, and the formulation of the composition. The thickness of the photochromic layer formed in this manner is, for example, preferably in a range of 5 to 80 um, and more preferably in a range of 20 to 60 um.

The optical article having the photochromic layer may or may not have one or more functional layers in addition to the photochromic layer. Examples of functional layers include layers known as functional layers of the optical article such as a protective layer, an antireflection layer, a water-repellent or hydrophilic anti-fouling layer, and an antifogging layer for improving the durability of the optical article.

One aspect of the optical article is a spectacle lens. In addition, as one aspect of the optical article, a goggles lens, a visor (cap) part of a sun visor, a shield member of a helmet, and the like may be exemplified. When the composition is applied to such a substrate for an optical article and a curing treatment is performed on the applied composition to form a photochromic layer, it is possible to obtain an optical article having an anti-glare function.

### [Eyeglasses]

One aspect of the present invention relates to eyeglasses including a spectacle lens, which is one aspect of the optical article. The details of the spectacle lens included in the eyeglasses are described above. When the eyeglasses include such a spectacle lens, for example, the photochromic compound contained in the photochromic layer develops a color when hit with sunlight outdoors and an anti-glare effect can be exhibited like sunglasses, and when returned to indoors, the photochromic compound can fade to restore transmission. Known techniques can be applied to the configuration of the frame and the like for the eyeglasses.

### [Examples]

Hereinafter, the present invention will be described in more detail with reference to examples. However, the present invention is not limited to embodiments shown in examples.

### [Example 1]

### <Preparation of polymerizable composition for optical article (coating composition for forming photochromic layer)>

In a plastic container, 80 parts by mass of polyethylene glycol dimethacrylate (in Formula 3 shown above, n=14, R represents an ethylene group, a molecular weight of 736) as the component A and 20 parts by mass of monofunctional (meth)acrylate shown in Table 2 were mixed.

In the mixture of the polymerizable compound obtained in this manner, the following photochromic compound (indeno-fused naphthopyran compound represented by the structural formula described in U.S. Patent No. 6296785), a photoradical polymerization initiator (bis(2,4,6-trimethylbenzoyl)phenylphosphine oxide (Omnirad 819, commercially available from IGM Resin B. V.)), an antioxidant (bis[3-(3-tert-butyl-4-hydroxy-5-methylphenyl)propionic acid][ethylenebis(oxyethylene)]), and a light stabilizer (bis(1,2,2,6,6-pentamethyl-4-piperidyl) sebacate) were mixed and sufficiently stirred. Then, defoaming was performed with a rotation/revolution type stirring defoaming device. Accordingly, a polymerizable composition for an optical article (coating composition for forming a photochromic layer) was prepared. The content of the component based on a total amount of 100 mass% of the composition was 94.9 mass% for the mixture of the polymerizable compounds, 3 mass% for the photochromic compound, 0.3 mass% for the photoradical polymerization initiator, 0.9 mass% for the antioxidant, and 0.9 mass% for the light stabilizer. In the composition, based on a total amount of 100 mass% of the polymerizable compound, the content of the component A is 80 mass%, and the content of the component B is 20 mass%.

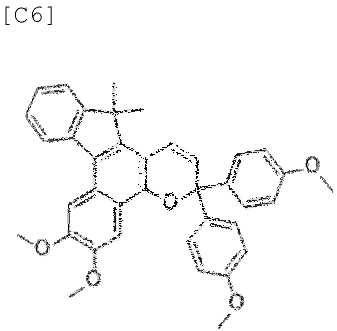

### <Production of spectacle lens>

A plastic lens substrate (product name HI-LUX; center thickness 2.2 mm, radius 70 mm, S0.00, commercially available from Hoya Corporation) was washed with pure water and dried. Then, the coating composition for forming a photochromic layer prepared above is applied to the convex surface (object-side surface) of the plastic lens substrate by a spin coating method. Spin coating was performed by the method described in Japanese Patent Application Publication No. 2005-218994. Then, the composition applied onto the plastic lens substrate was irradiated with ultraviolet rays (a wavelength of 405 nm) in a nitrogen atmosphere (an oxygen concentration of 500 ppm or less), and the composition was cured to form a photochromic layer. The thickness of the formed photochromic layer was 40 um.

In this manner, a spectacle lens having a photochromic layer was produced.

### [Examples 2 to 4 and Comparative Examples 1 to 3]

Spectacle lenses were produced as described in Example 1 except that the monofunctional (meth)acrylate was changed to that shown in Table 2.

### [Reference Example 1]

A spectacle lens was produced as described in Example 1 except that no monofunctional (meth)acrylate was used, and 100 parts by mass of the same component A as in Example 1 was used.

### [Evaluation method]

### (1) Evaluation of coloring density

The coloring density was evaluated by the following method according to JIS T7333: 2005.

For the photochromic layer (a cured layer obtained by curing the polymerizable composition) of each spectacle lens, light was emitted to the surface of the photochromic layer through an aeromass filter using a xenon lamp for 15 minutes (900 seconds), and the photochromic compound in the photochromic layer was caused to develop a color. The transmittance (measurement wavelength: 550 nm) during color development was measured with a spectrophotometer (commercially available from Otsuka Electronics Co., Ltd.). The light emission was performed so that irradiances and tolerances of irradiances specified in JIS T7333: 2005 were values shown in the following Table 1.

**[Table 1]**

| Wavelength range(nm) | Irradiance (W/m²) | Tolerance of irradiance (W/m²) |
|---|---|---|
| 300~340 | <2.5 | - |
| 340~380 | 5.6 | ±1.5 |
| 380-420 | 12 | ±3.0 |
| 420-460 | 12 | ±3.0 |
| 460-500 | 26 | ±2.6 |

The smaller value of the transmittance measured above (hereinafter referred to as a "transmittance during color development") indicates a higher density in color development of the photochromic compound.

### (2) Evaluation of fading rate

After measuring the transmittance during color development in the above (1), the transmittance was measured 60 seconds after light emission was stopped (hereinafter referred to as "transmittance after 60 s of fading"). The fading rate (unit: %/sec) was calculated by the calculation formula: fading rate=[(transmittance after 60 s of fading-transmittance during color development)/60]. It can be said that the higher the value of the fading rate obtained in this manner, the faster the fading rate.

### (3) Evaluation of solubility

The polymerizable compositions for an optical article (coating composition for forming a photochromic layer) prepared in the examples, comparative examples and reference example were visually observed, and when the no undissolved residues of the photochromic compound were observed, the solubility was evaluated as "A," and when undissolved residues were observed, the solubility was evaluated as "B."

The above results are shown in Table 2.

**[Table 2]**

| | Reference Example 1 | Comparative Example 1 | Comparative Example 2 | Comparative Example 3 | Example 1 | Example 2 | Example 3 | Example 4 |
|---|---|---|---|---|---|---|---|---|
| Monofunctional (meth)acrylate | none | phenoxyethyl methacrylate | isobornyl methacrylate | tert-butyl methacrylate | n-butyl methacrylate | 2-ethylhexyl methacrylate | isodecyl methacrylate | n-lauryl methacrylate |
| Solubility | A | A | A | A | A | A | A | A |
| Transmittance during color development(%) | 21.3 (reference value) | 20.6 | 19.8 | 19.0 | 20.0 | 20.1 | 20.1 | 19.3 |
| Fading rate (%/sec) | 0.35 (reference value) | 0.29 | 0.34 | 0.34 | 0.38 | 0.39 | 0.39 | 0.40 |

As shown below, the monofunctional (meth)acrylate used in Examples 1 to 4 is a monofunctional (meth)acrylate represented by Formula 1. On the other hand, the monofunctional (meth)acrylate used in Comparative Examples 1 to 3 is a monofunctional (meth)acrylate having no structure of Formula 1.

As shown in Table 2, in Comparative Examples 1 to 3, compared to Reference Example 1, according to addition of the monofunctional (meth)acrylate, the coloring density became higher but the fading rate became slower.

On the other hand, in Examples 1 to 4, compared to Reference Example 1, according to addition of the monofunctional (meth)acrylate, the coloring density became higher, but the fading rate became faster.

Based on the above results, it was confirmed that it was possible to form a photochromic layer that exhibits a high coloring density and a fast fading rate when colored upon exposure to light using the polymerizable composition containing the component A to C.

### [C7]

### n-Butyl methacrylate

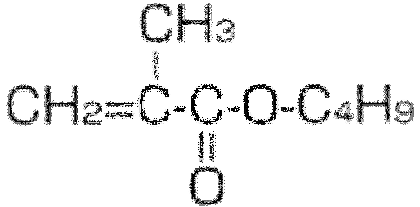

### [C8]

### 2-Ethylhexyl methacrylate

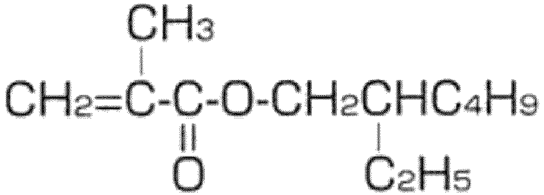

### [C9]

### Isodecyl methacrylate

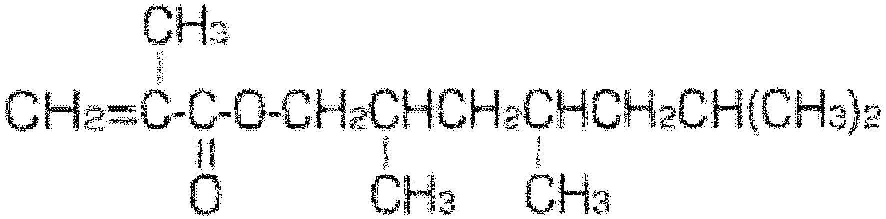

### [C10]

### n-Lauryl methacrylate

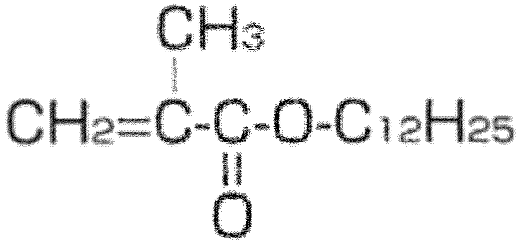

### [C11]

### Phenoxyethyl methacrylate

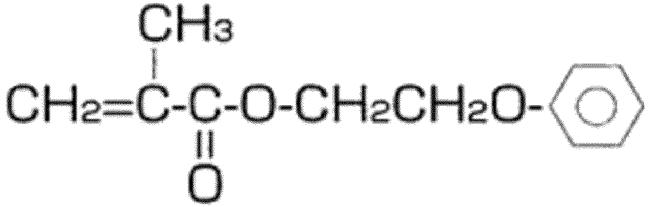

### [C12]

### Isobornyl methacrylate

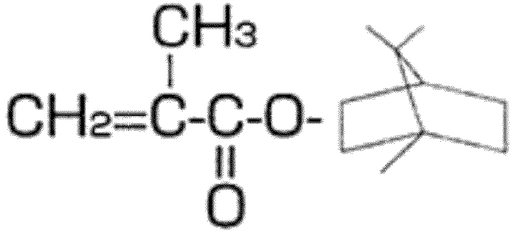

### [C13]

### tert-Butyl methacrylate

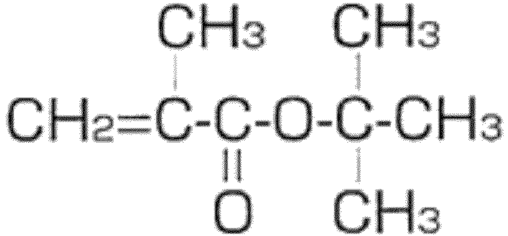

Finally, the above aspects will be summarized.

[1] A polymerizable composition for an optical article, including the following component A, component B and component C:
   component A: multifunctional (meth)acrylate containing a polyalkylene glycol moiety and having a molecular weight of 500 or more
   component B: monofunctional (meth)acrylate represented by the following Formula 1 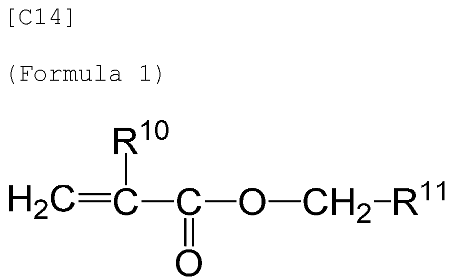 (in Formula 1, R¹⁰ represents a hydrogen atom or a methyl group, and R¹¹ represents a linear alkyl group having 3 or more carbon atoms or a branched alkyl group having 3 or more carbon atoms) component C: photochromic compound.
[2] The polymerizable composition for an optical article according to [1],
   wherein the polyalkylene glycol moiety of the component A is a polyethylene glycol moiety.
[3] The polymerizable composition for an optical article according to [1] or [2],
   wherein the component A is a bifunctional or trifunctional (meth)acrylate.
[4] The polymerizable composition for an optical article according to any one of [1] to [3],
   wherein, in Formula 1, the number of carbon atoms of the alkyl group represented by R¹¹ is 11 or more and 15 or less.
[5] An optical article including:
   a substrate; and
   a photochromic layer obtained by curing the polymerizable composition for an optical article according to any one of [1] to [4].
[6] The optical article according to [5], which is a spectacle lens.
[7] The optical article according to [5], which is a goggle lens.
[8] The optical article according to [5], which is a visor part of a sun visor.
[9] The optical article according to [5], which is a shield member of a helmet.
[10] Eyeglasses including the spectacle lens according to [6].

Two or more of the various aspects and various forms described in this specification may be combined in arbitrary combinations.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

### [Industrial Applicability]

The present invention is beneficial in the technical fields of eyeglasses, goggles, sun visors, helmets and the like.

## Claims

1. A polymerizable composition for an optical article, comprising the following component A, component B and component C:
component A: multifunctional (meth)acrylate containing a polyalkylene glycol moiety and having a molecular weight of 500 or more
component B: monofunctional (meth)acrylate represented by the following Formula 1 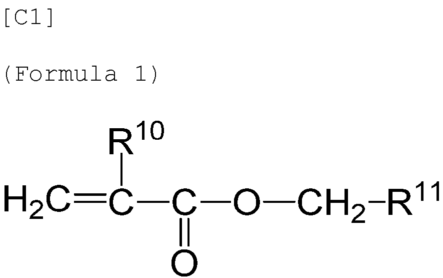 (in Formula 1, R¹⁰ represents a hydrogen atom or a methyl group, and R¹¹ represents a linear alkyl group having 3 or more carbon atoms or a branched alkyl group having 3 or more carbon atoms) component C: photochromic compound.

2. The polymerizable composition for an optical article according to claim 1,
wherein the polyalkylene glycol moiety of the component A is a polyethylene glycol moiety.

3. The polymerizable composition for an optical article according to claim 1,
wherein the component A is a bifunctional or trifunctional (meth)acrylate.

4. The polymerizable composition for an optical article according to claim 2,
wherein the component A is a bifunctional or trifunctional (meth)acrylate.

5. The polymerizable composition for an optical article according to claim 1,
wherein, in Formula 1, the number of carbon atoms of the alkyl group represented by R¹¹ is 11 or more and 15 or less.

6. The polymerizable composition for an optical article according to claim 2,
wherein, in Formula 1, the number of carbon atoms of the alkyl group represented by R¹¹ is 11 or more and 15 or less.

7. The polymerizable composition for an optical article according to claim 3,
wherein, in Formula 1, the number of carbon atoms of the alkyl group represented by R¹¹ is 11 or more and 15 or less.

8. The polymerizable composition for an optical article according to claim 4,
wherein, in Formula 1, the number of carbon atoms of the alkyl group represented by R¹¹ is 11 or more and 15 or less.

9. An optical article comprising:
a substrate; and
a photochromic layer obtained by curing the polymerizable composition for an optical article according to any one of claims 1 to 8.

10. The optical article according to claim 9, which is a spectacle lens.

11. The optical article according to claim 9, which is a goggle lens, a visor part of a sun visor or a shield member of a helmet.

12. Eyeglasses comprising the spectacle lens according to claim 10.
